# EUROPEAN PATENT APPLICATION

(11) **EP 3 693 207 A1**
(43) Date of publication of application: **12.08.2020**
(21) Application number: 19215997.8
(22) Date of filing: 13.12.2019
(51) Int. Cl.: B60M 1/12, H02G 7/16

(54) **HEATING SYSTEM FOR OVERHEAD LINES OF ELECTRIFIED RAILWAY LINES**

(30) Priority: 11.02.2019 IT 201900001965
(71) Applicant: Lef Holding S.r.l., 50019 Sesto Fiorentino (IT)
(72) Inventor: CAVALIERI, Filippo, 59015 Carmignano (IT)
(74) Representative: Emmi, Mario

(57) **Abstract**

The present invention relates to a heating system for preventing/stopping the ice formation onto the cable (100) for power supply of a catenary for railway convoys, the system comprising:
- A heating electrical cable (10);
- Fastening means (30) for applying the said heating electrical cable (10) along a predetermined section of the contact cable (100) so that the said heating cable (10) is at least partially in contact with said supply cable (100) ;
- An assembly of electrical supply (51, 52, 53) electrically connected with said heating electrical cable (10) in order to cause the passage of current thereof.

## Description

### Technical field

The present invention relates to the technical field of electrified railway lines for power supply of trains, underground railways and the like.

In particular, the invention relates to an innovative anti-icing system which enables to prevent the problem of ice formation around the electrical cable which supplies trains and underground railways.

### Brief outline of prior art

In railway field, an electric traction overhead line is formed by the contact cable and by other support elements thereof.

The contact cable is the electrical cable on which electric current is supplied and it is acquired by the train which contacts this cable through the pantograph of extractable/retractable type, for example.

Therefore, the contact cable is suspended overhead by means of support poles arranged along the line, at a predetermined distance from one another.

Poles support a bearing cable which spreads out above the contact line and supports it by means of hangers which are arranged at a certain distance from one another, for example approximately 4-5 meters.

Hangers extends vertically with respect to the support cable and therefore they are vertical element comprised between the support cable and the contact cable.

The shape of the support cable, which spreads out along the line, forms a sort of curve and for this reason it is named catenary.

A technical drawback concerns the possible ice formation on the contact cable.

In particular, in wintertime and/or in very cold areas such as mountain passes, humidity and water may become ice, in particular during night time and at dawn. Generally, ice formation around the contact cable consists in a tubular formation which surrounds wholly the cable for a certain length and with a high thickness even of some centimeters.

This sort of "ice sleeve" remains firmly fixed around the cable and obviously causes the stopping of electrical supply since the pantograph which transits in contact with the cable does not intercept the contact cable but instead the tubular ice.

If there are many ice formations and they spread out along a remarkable length, this may compromise the transit of the train which in fact is no more supplied by electricity.

Over the current state of the art, there exist equipping suitable for removing ice.

They are maintenance convoys with a sort of tool on top which scrapes the cable while transiting in order to remove the possible ice formation.

It is clear that this solution is not functional at all for many reasons.

First of all, this solution is not precautionary, i.e. it does not prevent ice formation. In the event of possible ice formation, it is always necessary to move this convoy which must search and travel many kilometers of line in order to ascertain that all the ice has been removed.

Ice may form also after the passage of the convoy and therefore this solution is not functional at all.

Moreover, when the ice formation is particularly thick, the tool may not be able to remove it and then, despite the passage, parts of cable may remain covered by ice thus impeding the transit of the train and causing severe traffic blocks.

Other alternative systems may comprise the spraying of oil along the line to prevent ice formation.

It is obvious that this solution is not possible due to costs and it creates a remarkable problem of environmental pollution, since spraying of oil implies a contamination after its dropping to the ground.

Publications US2009/250449 and DE10337937 are also known.

### Summary of the invention

Therefore, the aim of the present invention is to provide an innovative heating assembly, which resolves said technical drawbacks.

In particular, the aim of the present invention is to provide a heating assembly capable of heating cables for electrical supply of a railway line, in order to prevent ice formation.

Therefore, these and other aims are achieved with the present heating assembly for preventing ice formation onto a cable for electrical supply of a railway line, according to claim 1.

This heating system for preventing/stopping/reducing the ice formation onto the cable (100) for electrical supply of a catenary for railway lines comprises:
- A heating electrical cable (10);
- Fastening means (30) for applying the said heating electrical cable (10) along a predetermined section of the contact cable (100) so that the said heating cable (10) is at least partially in contact with said contact cable (100);
- An apparatus of electrical supply (51, 52, 53) electrically connected with said heating electrical cable (10) in order to cause the passage of current thereof.

In this manner, all said technical drawbacks are readily resolved.

In particular, the heating electrical cable is arranged in contact with the contact cable 100 (or supply cable in other words) and therefore it produces heat by passing a suitable current through it by Joule effect. This heat prevents the ice formation onto the contact cable 100, if the system starts functioning as soon as predetermined weather conditions are reached, thus preventing ice formation. The same system could anyway be activated after the ice formation, thus melting it rapidly.

In this manner, there is no need of operations along the line and the system prevents the problem in versatile way.

Advantageously, said fastening means (30) are of removable type and are configured so as to fasten in removable manner the heating cable (10) to the back of the contact cable (100) keeping the belly thereof clear.

Advantageously, said fastening means (30) are in form of at least one elastic clip (30) having an upper part (31) delimited by an upper wall (31) forming a volume suitable for holding the heating cable (10), said upper wall having two ends spaced from each other from which two lateral legs (32) branch off, the two lateral legs (32) being stretched apart from each other so as to shape an access (34) to the inner volume delimited by said elastic clip.

In this manner, the application and the potential removal are practically immediate.

Moreover, by means of this shape, the clip is applied like a pin to the supply cable, thus fixing it laterally but keeping the belly thereof clear for contacting the pantograph.

Advantageously, the shape of said upper wall (31) is semicircular or the like, such as semi-elliptical.

In this manner, it retraces the shape of the heating cable 10 that it fastens.

Advantageously, the said two legs (32) form the two lateral walls of the clip, at least one of said two lateral walls having a corner (41) folded towards the inner volume delimited by the clip.

In this manner, the vibrations themselves cause a greater folding of the corner which forms a fixing hook which fixes the cable (100), thus further improving the fastening.

Advantageously, at least one of said lateral walls has a notch which forms an opening (40) delimited by an edge (41'), said corner (41) being a part of said edge (41') folded towards the inner channel of the clip.

Advantageously, said lateral legs comprise at least a part generally V-shaped rotated by 90 degrees, preferably the end part of the wall from the opposite part to the part connected with the upper part 31.

Advantageously, said assembly of electrical supply (51, 52, 53) comprises a converter (51) configured for converting the tension of the supply cable (100) to a supply tension for supplying the heating cable (10).

In this manner, it is possible to use directly the current circulating in the railway line.

Advantageously, said converter (51) is electrically connected to an inlet (53) suitable for being connected to the contact line (100) for collecting the tension thereof and it is further connected to an outlet (56) to which it supplies the converted tension.

It is also described here a method for preventing/stopping the ice formation onto the contact cable (100) of a catenary for railway lines, the method comprising:
- The application of a heating electrical cable (10) spread out in contact with the supply cable (100) along one or more predetermined sections of the said contact cable (100);
- Generation of an electrical current in said heating cable (10) so that the heating is generated by Joule effect.

Advantageously, said heating electrical cable (10) is arranged on the back of the said supply cable (100).

In this manner, it keeps clear the belly of the cable 100.

Advantageously, said method comprises the application of the electrical cable (10) along the supply cable (100) on the back of the supply cable and the application of a predetermined number of elastically deformable clips (30) which trap, in releasable manner, the said heating electrical cable (10) onto the back of the supply cable (100).

Therefore, the said clips are arranged for keeping clear the belly of the contact cable 100, to which they apply and their application implies a further stretching apart of the legs which tend elastically to return to the initial position afterwards.

### Brief description of the drawings

Additional features and advantages of the present heating assembly, according to the invention, will become apparent from the following description of some preferred embodiments thereof, given only by way of non-limiting example, with reference to the attached drawings, wherein:
- Figure 1 depicts a schematization of the present heating assembly according to the invention;
- Figure 2 outlines the passage of a train with the pantograph in contact with the electrified overhead line onto which the above-mentioned system is applied;
- Figure 3 and figure 4 depict in greater details the circuit diagram for managing/generating electric current for generating heat;
- Figure 5 depicts instead in an axonometric view, a couple of devices arranged besides each other, which enable the removable fastening of the heating cable 10 to the overhead line of electric supply 100;
- Figures 6 and 7 depict in two axonometric views the whole supply cable 100 (or contact cable in other words) of the railway convoy on which the heating cable 10 is fastened through such fastening devices of removable type;
- Figure 8 depicts a section of the contact cable 100 on which the heating cable 10 is arranged with the fastening device depicted in section;
- Figure 9 is a transversal section of the fastening device only;
- Figure 10 depicts two further axonometric views of the present elastic clip in order to highlight the shape of lateral notches 40;
- Figure 11 depicts in enlarged axonometric view the detail B of the notch depicted in figure 10;
- Figure 12 depicts two further front and lateral views with some preferred sizes.

### Description of some preferred embodiments

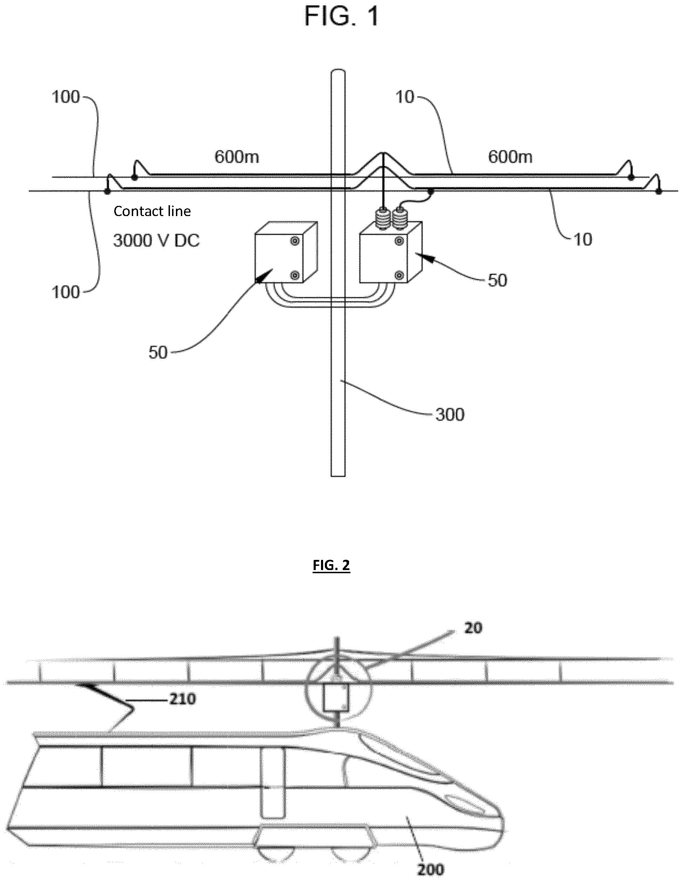

The invention is schematically described with reference to figure 1 and figure 2.

Figure 1 and figure 2 depict with number 100 the contact cable in which the current supplying the train 200 passes during its passage by means of the pantograph 210 which is brought in contact with said cables through a motion of extraction/retraction.

The electrical supply system of the train through the use of the pantograph 210 is known art and it is not the subject of the specific invention, thus it is not described in further details.

Figure 1 depicts with number 300 the support pole of the overhead line on which the described system can be assembled.

The contact line is generally supplied with 3000 V direct current DC and as well this is a constructive standard of railway lines which is not the subject of the present invention.

As described thereinafter, even if the present heating system is applied onto railway lines supplied with 3000V DC, it could be anyway applied to any lines, for example underground lines, even with different electrical supplies, by simply adapting some elements in routinary way.

By describing the invention in greater details, the assembly subject of the present invention is fitted with three components cooperating with one another:
The first component is constituted by the heating cable 10, therefore by a cable where current circulates in order to produce heat by Joule effect. In figure 1, these cables are indicated by number 10 and are spread out and along the back of the contact cable 100 for a predetermined length, for example 1200 m. As a matter of facts, they lay onto the back of the contact line 100, so as to keep clear the belly of the said contact line 100 which is clear to contact the pantograph of the train during its passage (see for example schematization of figure 2).

It is obvious that any lengths of said heating cables 10 can be provided and they can be arranged even in sections along the line depending on needs.

Obviously, the heating cable 10 must be arranged in firm manner on the back of the contact cable, so that it does not hang laterally but is adherent and spread out on the cable 100. In fact, in the event of loose walls, there would be the risk of being stripped away by the train during its passage by means of the pantograph 210.

Going further with the structural description of the invention, with reference to figures from 5 to 12, suitable fastening means are described which enables not only a removable connection of the cable but also a firm, stable connection which resists vibrations thus ensuring a high safety standard.

The fastening system described in details below enables not only a fast, firm and safe and at the same time removable application of the heating cable 10 to the contact cable 100, but it is obviously engineered so as not to exceed the belly part of the contact cable 100 and thus keeping it clear for the passage of the pantograph of the train.

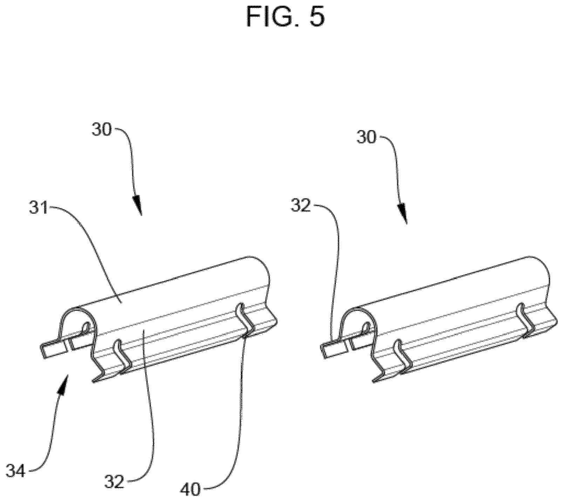

Figure 5 depicts a succession of two of them, since, depending on the length of the section of contact cable 100 to be covered, it will be necessary to arrange in succession a series of such fastening means in order to fasten the heating cable 10 along the equivalent length, thus avoiding that loose parts hang dangerously downwards and then they will remain trapped in the pantograph 210 and will be torn away by the passage of the train.

The more the heating cable 10 remains spread out in contact with the contact line 100 the better is obviously the effect of heating, thus avoiding risks that the cable is accidentally torn away by the passage of the train.

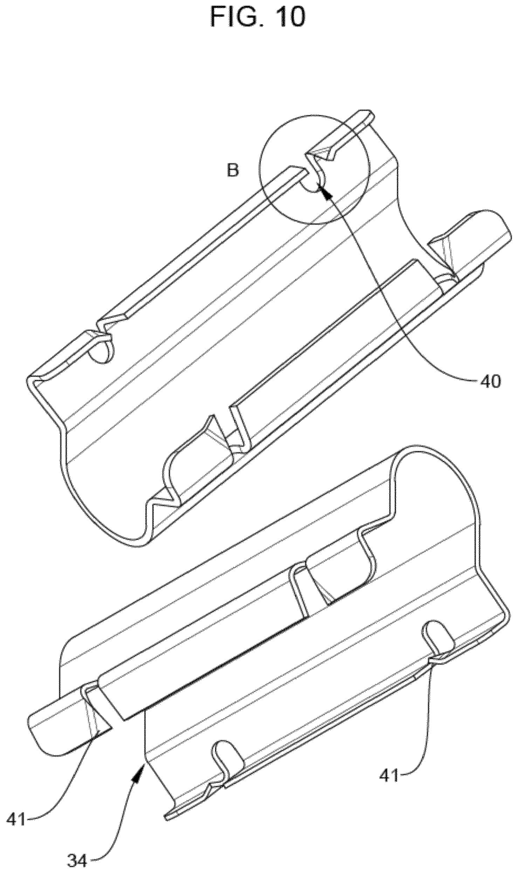

Figure 5, as well as figure 10, depict structurally an axonometric view of two of such fastening devices 30.

As mentioned, depending on the length to be covered, a plurality of them, or a thousand could be used if the line to be covered is long.

In fact, generally, it is advisable to apply them besides one another, practically in continuous succession or, alternatively, at a preset pitch which does not exceed one-meter distance from one another.

Therefore, it is immediately inferable that thousands of such devices in succession would be necessary to cover the length of some kilometers.

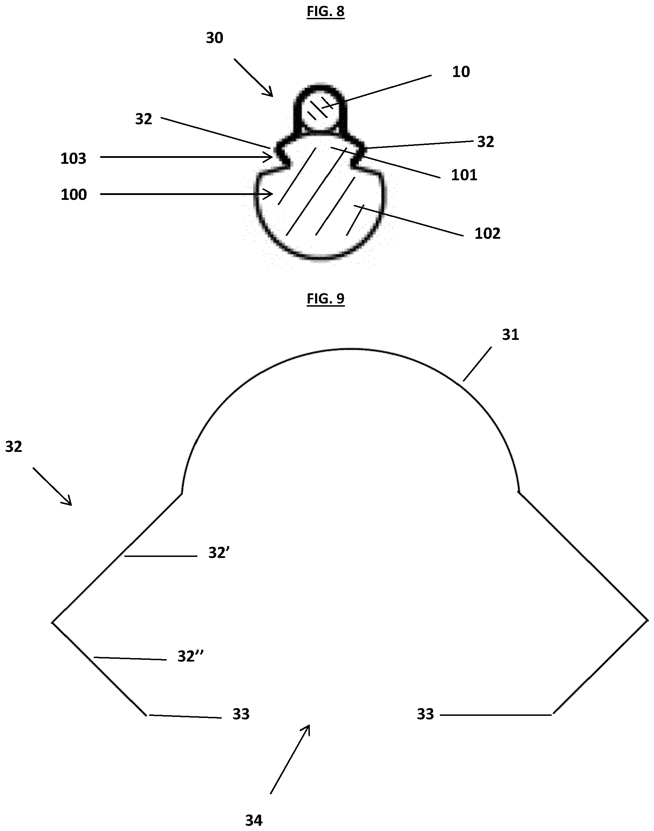

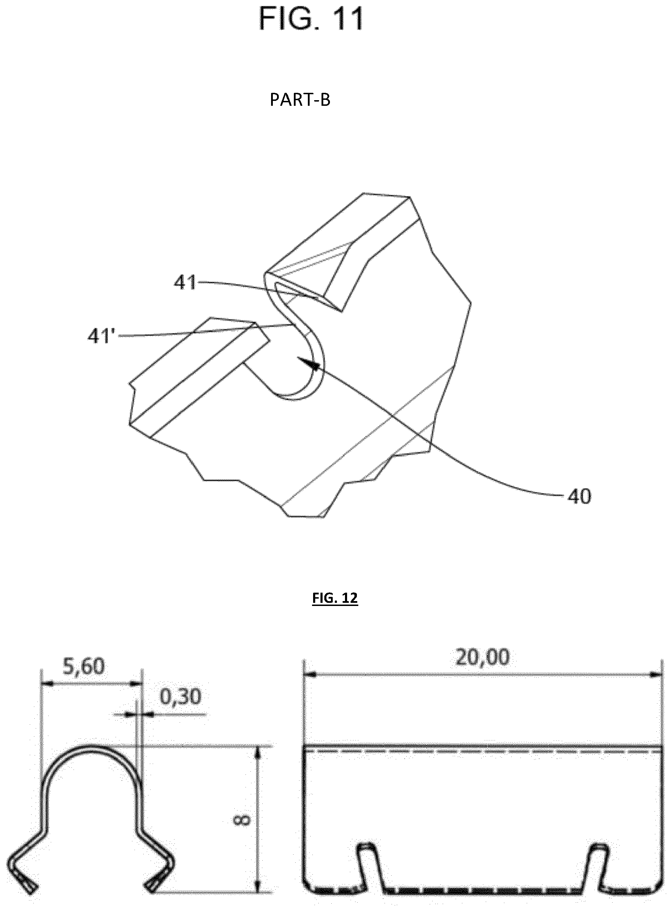

Therefore, as depicted in figure 5 and figure 10, such fastening means are in the form of an elastically deformable element, such as metal, with the purpose of elastic clip, like a clothes-peg. Therefore, figure 5 (see also section of figure 9, section of figure 12 and axonometric view of figure 10) depicts an upper part 31 with semi-circular shape or the like and such as to retrace accurately or substantially the shape of the heating cable 10.

From this semi-circular upper part 31 two lateral wings 32 branch off which constitute the fixing elements which fasten to the surface of the contact cable 100. As well inferable from figure 5 and figure 9 and figure 12 which are two views in transversal section, the two lateral wings which branch off from the dome 31 end with the lower edges spaced from one another and thus defining an opening 34, through which the said clip is fastened to the contact cable 100.

Therefore, the assembly of the dome 31 and the two legs forms an overall inner channel having an access delimited by the distance of said lower edges of the lateral walls and internally delimited by said lateral walls and the upper edge. Therefore, the legs form the lateral walls.

Figure 12 well depicts front and lateral view.

Each lateral wall 32 is not rectilinear but has a V shape rotated by 90 degrees.

With reference to figure 9 and figure 12 it is provided a side 32' inclined outwards and a side 32'' folded inwards, preferably more or less 90 degrees with respect to the side 32'.

The solution of figure 12 is identical to that of figure 9 except for the fact that the solution of figure 12 provides a section of wall of rectilinear joint between the edge of the semicircular upper part and the V-shaped part of wall, which can be provided depending on the intended uses of the clip.

The V-shape of the lateral wall, at least in the final section thereof, optimizes the fastening, when it must fix bodies with irregular shape which form sharp edges like the exemplifying case.

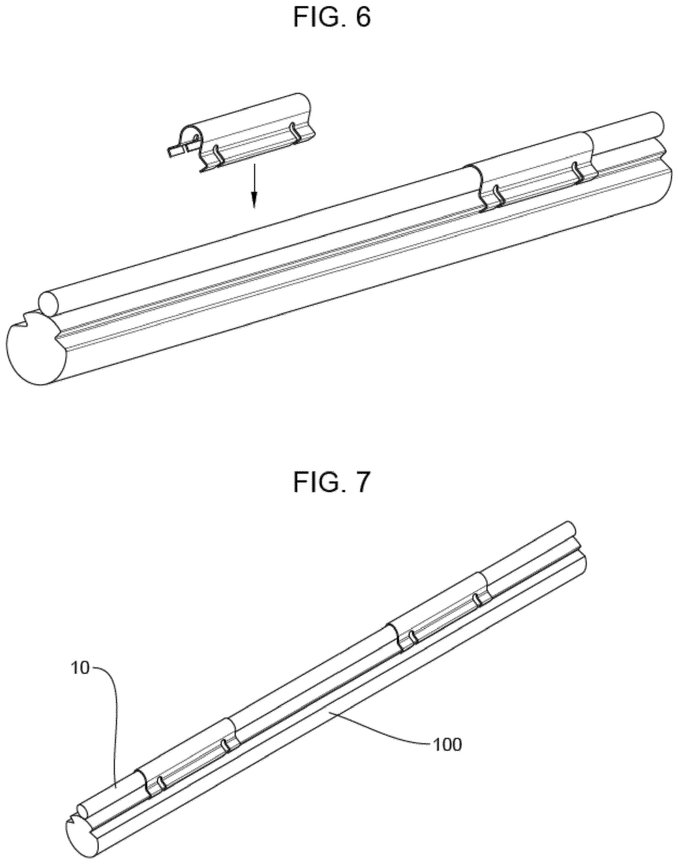

Figure 6 depicts an example of application, depicting with the arrow the direction of application of the clip under examination which is pressed against the cable 10 arranged onto the back of the contact rod 100. The two wings (or legs in other words) 32 spread out elastically by increasing their relative distance to reach the fastening position (depicted in figure 7) in which they fix a corner of the cable 100 to which they fasten and with the electrical heating cable 10 firmly maintained in position on the back of the cable 100 within the dome 31.

The section of figure 8 depicts, for clearing purposes in transversal section, the heating cable 10 maintained on the back of the contact cable 100 by means of the elastic clip 30 which fixes through its wings 32 the lateral edge of the contact cable 100.

The contact cable 100 (electric traction) both for railway lines of traditional type (3000Vdc) and high-speed trains (25KVac) has a cylindrical shape shaped with sections from 80mmq to 150mmq.

Therefore, it is shaped like a full tube with a certain stiffness. It is generally machined on its back by removing material or through extrusion or lamination which shape it with an upper part 101 which forms a sort of angular sector 101 which joins the remaining underlying circular part 102.

Practically, the triangular segments 103 are removed from the sides, thus creating on the two sides two lateral walls arranged each other in a V shape rotated by 90 angular degrees which constitute a great fixing edge for the legs 32 which are in form of a complementary V (compare for example figure 8 and figure 9).

The shape of the contact cable 100 is known art and it is not the specific subject of the present invention, thus it is not described in further details.

Therefore, in this manner, during the application the two legs 32 stretch apart causing the elastic clip being astride onto the cable 10 with the legs 12 which enlarge to close elastically afterwards by fixing elastically the upper edge 101 of the cable 100.

The size of the described clip is selected so as to firmly fix the cable 10 and the cable 100 by maintaining them in contact and a predetermined number of such clips can be arranged along the line depending on needs.

Figure 12 depicts some sizes in millimeters which are optimal and preferred.

The overall longitudinal length is 2 cm only, with a height of 8 mm only and thickness of 0.3 mm only (practically a highly flexible sheet metal).

Obviously, other sizes may be used.

The elastic clip may be made from various metals or alloys. For example, it can be made from steel (for example Inox steel) or iron, as well as alloys of bronze or brass. It might alternatively be made not necessarily from metal material but for example plastic.

Along the sides, i.e. the legs which form the lateral walls 32, there are two notches 40 for each side, which are well highlighted in figure 11, enlargement B and in figure 10.

As it is clearly inferable from figure 11, the purpose of notches is to remove a small area 40, for example U-shaped, obviously with smaller height with respect to the overall height of the lateral wall 32, by starting from the lower edge of the lateral wall. The removed material forms an opening 40 having a certain edge 41' forming a corner 41 which is foldable inwards, i.e. towards the housing 34, thus forming a folded tooth 41 or a sort of hook. It is generally triangular-shaped, folded inwards, i.e. towards the housing 34.

This tooth 41 folded inwards forms a sharp pointed corner which pricks and therefore better fixes the cable 100 in its contact point.

The sharp corner which forms the tooth 41 is the one formed by the wall of the notch with the lower edge of the same lateral wall which is cut.

Moreover, being the thicknesses very thin (i.e. well below one millimeter) the tooth 41 deforms easily thus elastically bending and folding further both in permanent manner and with a bending having spring back.

This has an effect of optimizing remarkably the fixing since, due to the vibrations of the passage of the train, this shape of the tooth is such that it deforms further by folding more inwards and thus increasing its fixing degree. In practical, vibrations which cause generally the accidental removal of components, is this case favor and increase the fixing of the clip, which by means of this small tooth which varies its deformation (potentially by deforming further and/or returning elastically to an original position), increases its protrusion towards the housing 34, thus optimizing the fixing.

However, the present elastic clip, even intended for this heating system, could be used even for other applications different from the described one, for example for fastening other components always in railway and non-railway field.

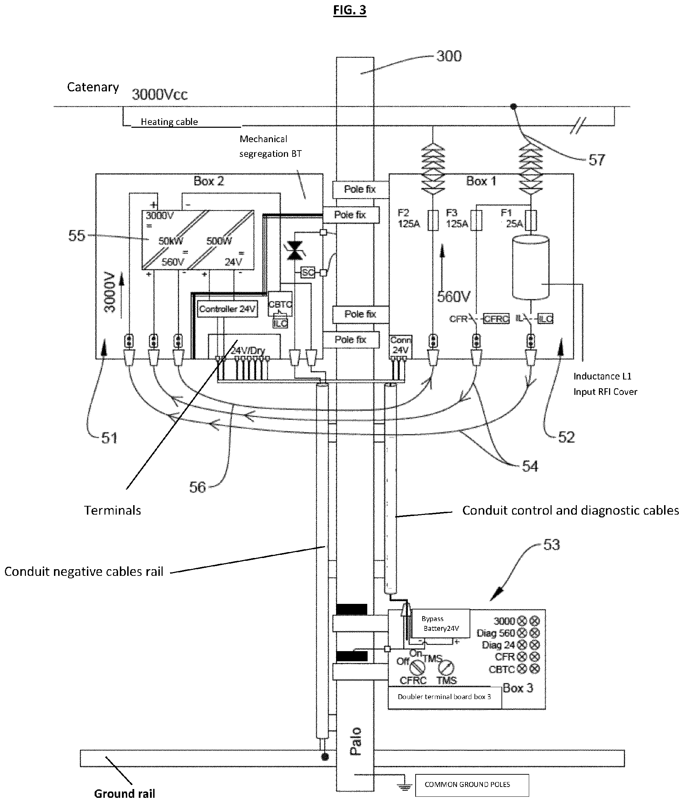

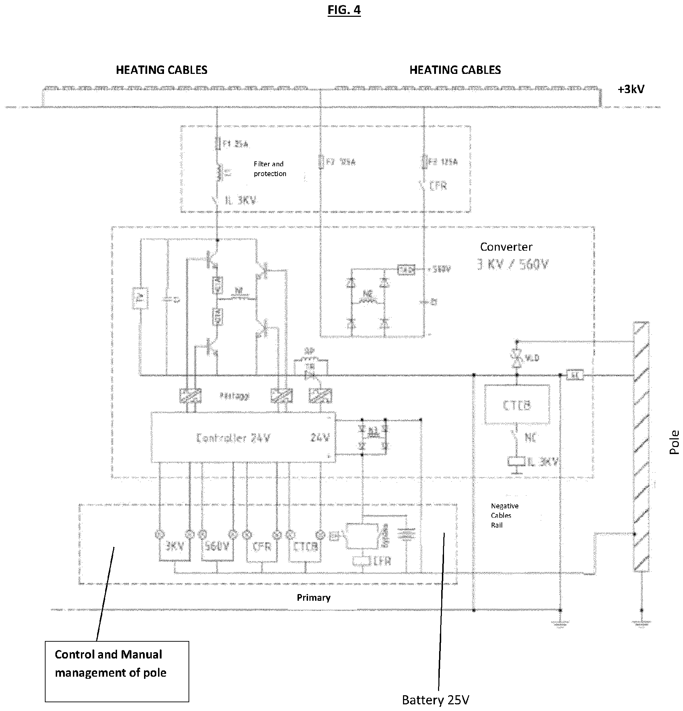

The third present component is a system for converting 3000V DC tension collected from the line to a 540V DC tension for generating a suitable current intended for circulating in the cable 10 with the only purpose of generating heat. It is depicted with reference to figure 3 and 4.

This converter system is well described in figure 3 wherein it is highlighted the pole 300 to which it is fastened.

There are provided three boxes for containing electronic componentry and in particular:
- Box 52 (also named BOX_1);
- Box 52 (also named BOX_2);
- Box 53.

Box 53 is electrically communicating with boxes 51 and 52 arranged at a certain height on the pole 300 in proximity of the contact line 100 (therefore generally at a height of approximately 6 m from the ground).

Box 53 has the only purpose of monitoring, that is it indicates the operating state of the system and main values or parameters, etc. Therefore, box 53 is a sort of control panel arranged at the base of the pole 300 for an easy access, with the purpose of enabling an operator to monitor data, such as maintenance inspections.

Therefore, it is not an essential component of the invention.

The panel 53 operates at a very low tension (24V) which is always produced and supplied by the main converter described thereinafter.

Boxes 52 and 53 form in their whole the above-mentioned converter which collects tension from the 3000 V line of the train and converts it to a tension suitable for supplying the cable 10 to create heat for Joule effect.

Figure 3 depicts with number 57 the electrical cable which collect the tension of the 3000 Vdc catenary and transfers it through cables 54 (see the direction of arrows applied to cables) to the converter 55 arranged in the box 51.

The highly insulated transformer receives 3000 V from the catenary and transforms them in 560 V DC approximately, which serve for generating the circulation of current in the heating cable 10.

Number 56 highlights the return cable (see in fact the direction of arrow) which supplies 560V to the heating cable 10.

In greater details, the transformer 55 is formed by a part with suitable electric coils which transform a part of inlet 3000V tension to 560V tension while another part of the transformer provides coils necessary to obtain separately 24V tension for supplying controls, aux controls and signaling.

For example, an inner self-control may provide temperature sensors which control the activation of the system when temperature drops below a preset threshold value.

According to the invention and its structure, this system does not need any supply batteries since this structure, which is installable along the line in the necessary sections by using pre-existing support poles 300, is self-supplying by collecting directly from the catenary the necessary voltage and converting it to a voltage suitable for such purposes.

In this manner, even inaccessible areas may be easily covered by this system, thus remarkably saving costs for buying and installing batteries which may easily break down for extreme conditions.

Nevertheless, that having been said, it might be possible to apply supply batteries connected to the heating cable 10 in place of the converter system (51, 52, 53) in order to generate heat.

For example, batteries might be rechargeable and equipped with solar panels.

Nevertheless, in this case the technical drawback would be that batteries might run down and/or break down, thus requiring certainly more frequent maintenance call-outs.

Therefore, box 52 (box_1) contains inside the 560 V tension inlet with protections as already described and the sectioning (i.e. opening/closing) with various protection filters (see figure 3 and figure 4).

As mentioned, the conversion from 3000 V to 560 V occurs in box 51 while a 500W part serves for maintaining the system and auxiliary parts on.

Finally, the described system might be connected to a control base through a remote connection which enables to monitor functional parameters of the described system with potential remote call-outs.

## Claims

1. A heating system for preventing/stopping the ice formation onto the electrical contact cable (100) of a catenary for railway convoys, the system comprising:
- A heating electrical cable (10);
- Fastening means (30) for applying the said heating electrical cable (10) along a predetermined section of the contact cable (100) so that the said heating cable (10) is at least partially in contact with said contact cable (100);
- An apparatus of electrical supply (51, 52, 53) electrically connected with said heating electrical cable (10) in order to cause the passage of current thereof.

2. A heating system, as per claim 1, wherein said fastening means (30) are of removable type and are configured so as to fasten in removable manner the heating cable (10) onto the back of the contact cable (100) keeping the belly thereof clear.

3. A heating system, as per claim 1 or 2, wherein said fastening means (30) are in form of at least one clip (30) having an upper part (31) forming a volume suitable for housing the heating cable (10), said upper wall having two ends spaced from each other from which two lateral legs (32) branch off, the two lateral legs (32) being spaced from each other so as to shape an access to the inner volume of the clip.

4. A heating system, as per claim 3, wherein the shape of said upper wall (31) is semicircular or the like, such as semi-elliptical.

5. A heating system, as per one or more of the claims 3 or 4, wherein the said two legs (32) form the two lateral walls of the clip, at least one of said two lateral walls having a fixing tooth (41) folded towards the inner containment volume delimited by the walls of the clip.

6. A heating system, as per claim 5, wherein at least one of said two lateral walls has a notch which forms an opening (40) delimited by an edge (41'), said tooth (41) being a part of said edge (41') folded towards the inner channel of the clip.

7. A heating system, as per one or more of the preceding claims from 3 to 6, wherein said lateral legs are generally V-shaped rotated by 90 degrees.

8. A heating system, according to claim 1, wherein said assembly of electrical supply (51, 52, 53) comprises a converter (51) configured for converting the tension of the contact cable (100) to a supply tension for supplying the heating cable (10).

9. A heating system, as per claim 8, wherein said converter (51) is electrically connected to an electrical inlet (57) suitable for being connected to the contact line (100) for collecting the tension thereof and it is further connected to an outlet (56) to which it supplies the tension converted to a lower tension range.

10. A method for preventing/stopping the ice formation onto the contact cable (100) of a catenary for railway convoys, the method comprising:
- The application of a heating electrical cable (10) spread out in contact with the contact cable (100) along one or more predetermined parts of the said contact cable (100);
- Generation of an electrical current in said heating cable (10) so that the heat is generated by Joule effect.

11. The method, as per claim 10, wherein said heating electrical cable is arranged on the back of said supply cable (100).

12. The method, as per claim 11, comprising the application of a predetermined number of elastically deformable clips (30) which traps, in releasable manner, the said heating electrical cable (10) on the back of the supply cable (100).

13. The method, as per claim 12, wherein the said clips (30) are arranged for keeping clear the belly of the contact cable (100), to which they apply and their application implies a further stretching apart of the legs which tends elastically to return to the initial position afterwards.
